# EUROPEAN PATENT APPLICATION

(11) **EP 4 851 896 A1**
(43) Date of publication of application: **09.12.2026**
(21) Application number: 24928716.0
(22) Date of filing: 27.12.2024
(51) Int. Cl.: G06Q 20/06, G06Q 20/38, G06Q 20/36, G06Q 20/02, H04L 9/00, H04L 9/32, H04L 9/08

(54) **DIGITAL CURRENCY OPERATION SYSTEM AND OPERATION METHOD THEREOF**

(30) Priority: 04.03.2024 KR 20240030997; 24.04.2024 KR 20240054816
(71) Applicant: Samsung Electronics Co., Ltd., Suwon-si, Gyeonggi-do 16677 (KR)
(72) Inventor: LEE, Gawon, Suwon-si, Gyeonggi-do 16677 (KR)
(74) Representative: Gulde & Partner
(86) International application number: PCT/KR2024/021265
(87) International publication number: WO 2025/187918

(57) **Abstract**

An electronic apparatus may: acquire a token identifier corresponding to an offline-transition request; and transmit, to an operation server by means of a private key included in a predetermined offline-transition key pair, which is an asymmetric key for offline-transition, pre-offline digital currency including the token identifier, quantitative information of digital currency to be issued by offline-transition, and a public key of a predetermined blockchain key pair or a token signature signed for a value derived from the public key. The electronic apparatus may receive, from the operation server, offline digital currency including an authority signature that has been signed by an offline-transition authority key for pre-offline digital currency. The electronic apparatus may update offline digital currency information of a corresponding account on the basis of the offline digital currency. The authority signature may be generated by the operation server on the basis of verification of the predetermined offline-transition key pair, validation of the token identifier, balance of the online digital currency, and signature verification by the token signature.

## Description

### [Technical Field]

The disclosure relates to a digital currency operating system supporting offline tokenization or online tokenization of a digital currency and an operating method thereof.

### [Background Art]

A digital asset, which is an intangible asset, may include a currency used in a digital manner (hereinafter, referred to as a "digital currency"). The digital currency may collectively refer to a currency that may be used as a payment means by storing, in a digital form, a monetary value that is not a physical object. The digital currency may include a virtual currency, an electronic currency, a digital private currency, or a legal digital currency.

The virtual currency may be a digital currency which has a limited scope of use is limited to a local organization, such as a community or a specific company. The virtual currency may correspond to, e.g., an Internet voucher or mobile coupon. The electronic currency may be an electronic payment means capable of storing a monetary value in the form of an electronic symbol, that is, as digital information, in a card in which an integrated circuit (IC) chip is embedded or in an electronic device connected to a network, and then capable of being used at the time of payment.

For the digital currency to be used as a payment means, the digital currency may be based on a network environment that guarantees digital accessibility. Therefore, there may be difficulty in using the digital currency as a payment means in a network environment in which digital accessibility is not guaranteed.

The above-described information may be provided as related art for the purpose of assisting an understanding of the disclosure. No claim or determination is made as to whether any of the foregoing is applicable as prior art in relation to the disclosure.

### [Disclosure of Invention]

### [Solution to Problems]

According to an embodiment of the disclosure, a method for operating an electronic device may include obtaining a token ID corresponding to an offline tokenization request, transmitting, to an operating server, a to-be-signed (TBS) offline token including a token signature (TS) in which signing on the token ID, quantitative information of a digital currency to be issued by offline tokenization, and a public key of a predetermined block chain key (BCK) pair or a value derived from the public key is performed by a private key included in a predetermined offline tokenization key (OTK) pair that is an asymmetric key for offline tokenization, receiving, from the operating server, an offline digital currency including an authority signature (AS) in which signing on the TBS offline token is performed by an offline tokenization authority key (OTAK), and updating offline digital currency information of a corresponding account based on the offline digital currency. The AS may be generated by the operating server based on verification of the predetermined OTK pair, a validity check of the token ID, a balance of an online digital currency, and signature verification by the TS.

According to an embodiment of the disclosure, an electronic device includes a communication circuit, memory including one or more storage media storing instructions, and at least one processor including processing circuitry, wherein, when the instructions are executed individually or collectively by the at least one processor, the electronic device may operate to obtain a token ID corresponding to an offline tokenization request, transmit, to an operating server, a TBS offline token including a TS in which signing on the token ID, quantitative information of a digital currency to be issued by offline tokenization, and a public key of a predetermined BCK pair or a value derived from the public key is performed by a private key included in a predetermined OTK pair that is an asymmetric key for offline tokenization, receive, from the operating server, an offline digital currency including an AS in which signing on the TBS offline token is performed by an OTAK, and update offline digital currency information of a corresponding account based on the offline digital currency. The AS may be generated by the operating server based on verification of the predetermined OTK pair, a validity check of the token ID, a balance of an online digital currency, and signature verification by the TS.

According to an embodiment of the disclosure, a method for operating an operating server may include receiving, from an electronic device, a TBS offline token including a TS in which signing on a token ID, quantitative information of a digital currency to be issued by offline tokenization, and a public key of a predetermined BCK pair or a value derived from the public key is performed by a private key included in a predetermined OTK pair that is an asymmetric key for offline tokenization, generating an AS in which signing on the TBS offline token is performed by an OTAK, and transmitting an offline digital currency including the AS to the electronic device.

According to an embodiment of the disclosure, an operating server includes a communication circuit, memory including one or more storage media storing instructions, and at least one processor including processing circuitry, wherein, when the instructions are executed individually or collectively by the at least one processor, the operating server may operate to receive, from an electronic device, a TBS offline token including a TS in which signing on a token ID, quantitative information of a digital currency to be issued by offline tokenization, and a public key of a predetermined BCK pair or a value derived from the public key is performed by a private key included in a predetermined OTK pair that is an asymmetric key for offline tokenization, generate an AS in which signing on the TBS offline token is performed by an OTAK, and transmit an offline digital currency including the AS to the electronic device.

### [Brief Description of Drawings]

In relation to the description of the drawings, the same or similar reference signs may be used for the same or similar components.
FIG. 1 is a configuration diagram illustrating a digital currency operating system according to an embodiment of the disclosure.
FIG. 2 is a diagram illustrating an offline tokenization or online tokenization in a digital currency operating system according to an embodiment of the disclosure.
FIG. 3 is a flowchart illustrating offline tokenization and/or online tokenization for a legal crypto currency in a digital currency operating system according to an embodiment of the disclosure.
FIG. 4 is a signal flow diagram illustrating offline tokenization in a digital currency operating system according to an embodiment of the disclosure.
FIG. 5 is a signal flow diagram illustrating online tokenization in a digital currency operating system according to an embodiment of the disclosure.
FIG. 6 is a configuration diagram illustrating a processor for performing offline tokenization and/or online tokenizations in an electronic device according to the disclosure of the present invention.
FIG. 7 is a configuration diagram illustrating a processor for performing offline tokenization and/or online tokenizations in an operating server according to the disclosure of the present invention.
FIG. 8A is a diagram illustrating a user interface example for requesting offline tokenization in an electronic device according to an embodiment of the disclosure.
FIG. 8B is a diagram illustrating a user interface example for offline tokenization in an electronic device according to an embodiment of the disclosure.
FIG. 9A is a diagram illustrating a user interface example for requesting online tokenization in an electronic device according to an embodiment of the disclosure.
FIG. 9B is a diagram illustrating a user interface example for online tokenization in an electronic device according to an embodiment of the disclosure.

### [Mode for the Invention]

Hereinafter, embodiments of the disclosure will be described in detail with reference to the drawings such that a person having ordinary skill in the art to which the disclosure pertains may easily practice the embodiments. However, the disclosure may be implemented in various different forms and is not limited to the embodiments described herein. With regard to the description of the drawings, the same or similar reference numerals may be used for the same or similar components. Further, in the drawings and the related description, descriptions of well-known functions and configurations may be omitted for clarity and conciseness.

In an embodiment of the disclosure, in order to adaptively process an offline transaction or an online transaction based on a network environment, there may be provided a digital currency operating system supporting offline tokenization or online tokenization of a digital currency and an operating method thereof.

According to an embodiment of the disclosure, by utilizing a smart contract technology without a separate standalone operation in an individual terminal, an operation for supporting offline tokenization or online tokenization is programmed, and thus reliability of an operation result may be improved.

Technical problems to be achieved in the disclosure are not limited to the above-mentioned technical problems, and other technical problems not mentioned above may be derived from example embodiments of the disclosure by a person having ordinary skill in the art.

Effects obtainable from the example embodiments of the disclosure may be clearly derived and understood from the following description by a person having ordinary skill in the art to which the example embodiments of the disclosure pertain. In other words, unintended effects resulting from implementing the example embodiments of the disclosure may also be derived from the example embodiments of the disclosure by a person having ordinary skill in the art.

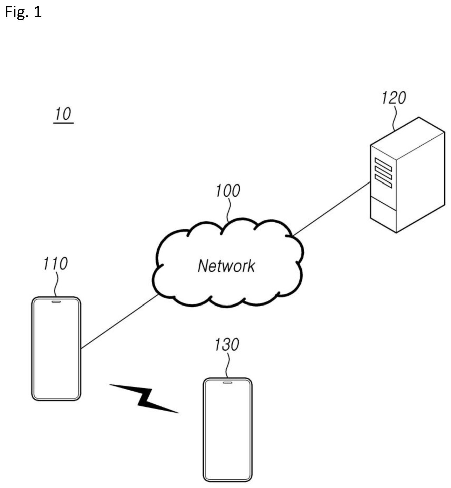

FIG. 1 is a configuration diagram of a digital currency operating system 10 according to an embodiment of the disclosure.

Referring to FIG. 1, the digital currency operating system 10 may include at least one electronic device 110 and/or 130 or an operating server 120 that provides, in a network environment, use of a digital currency, such as a digital transaction (hereinafter, referred to as a "transaction") or distribution of the digital currency.

The network environment may support a communication function of connecting a plurality of nodes by transmission media and exchanging a signal, information, or data therebetween. The network environment may provide a platform for supporting communication functions between the plurality of nodes by using a network 100 as a transmission medium. The transmission media may be based on long-distance communication. Long-distance communication may use, as a standard protocol, a communication protocol such as legacy cellular, 5G, next-generation communication, the Internet, or a computer network (e.g., a local area network (LAN) or a wide area network (WAN)).

The plurality of nodes may include hosts capable of executing an application (or an App) (e.g., a wallet App of a personal account) corresponding to a specific event (e.g., a transaction request for a digital currency, offline tokenization of a digital currency, or online tokenization of a digital currency). The digital currency (or a crypto currency) may be used as a payment means for purchasing or borrowing an article or using a service. A used amount (or a quantity unit), according to the purchasing of the article or the using of the service, may be deducted from a remaining amount (or a remaining quantity) of the digital currency being held.

For example, the digital currency may be a legal digital currency. The legal digital currency may correspond to a digital asset issued and/or controlled by a trusted guaranteed institution, such as a central bank or a government. The legal digital currency may be issued by a guaranteed institution using a distributed ledger based on a block chain technology. The legal digital currency may be, e.g., a central bank digital currency (CBDC) issued by a central bank of each country. The legal digital currency may not only reduce a manufacturing cost compared to cash but may also be distributed quickly while preventing an illegal transaction. The CBDC may be included in a stable coin whose volatility is reduced by being fixed to a specific currency or commodity. The legal digital currency is similar to a digital private currency (e.g., Bitcoin, Ethereum, or Ripple) in that it is stored in an electronic form by using a block chain technology but may be relatively higher in stability than the digital private currency in that it is guaranteed by a specific institution (e.g., a central bank). The block chain technology is a distributed data storage technology in which a record of a transaction is not stored in a server, and all users participating in the transaction simultaneously connect transaction details in a chain form and record the transaction details in a plurality of recording media (e.g., a distributed ledger).

The CBDC, as a direct liability of a central bank, may be a digital payment and settlement means having the same unit of account as a general legal currency. The CBDC may include a wholesale CBDC that a financial institution including commercial bank places in a central bank account and uses, according to an issuance target or a use entity. The CBDC may include a retail or universal CBDC that the general public including households and/or companies may place in an account of a central bank or a private payment service provider (PSP) or carry in a token form on a mobile device and use like cash.

The wholesale CBDC not only provides a large-value payment and settlement function through a block chain or distributed ledger network 100 permissioned to a financial intermediary institution including a commercial bank holding a reserve in a central bank but also enables a new financial service. For example, the wholesale CBDC may have programmability in that the wholesale CBDC may implement a smart contract in which a transaction is automatically executed in the event that a set condition is satisfied. The wholesale CBDC may facilitate composability of a transaction in that a plurality of functions may be combined and executed together. The wholesale CBDC may operate across a border through a multi-CBDC platform including central banks and currencies of various countries in the world.

The retail or universal CBDC may have a close substitution relationship with a retail fast payment system (FPS). Commercial banks and non-bank PSPs may perform most of daily operational tasks and consumer-facing services related to the retail or universal CBDC. In contrast, a central bank may focus on core operations, such as guaranteeing stability of a currency value, elastically supplying liquidity, and supervising overall security of a payment and settlement system.

An implementation scheme of the CBDC may be divided into a wholesale scheme or a retail scheme. A central bank of each country may adopt one of the wholesale scheme or the retail scheme. The CBDC may be regarded as a new transaction means capable of replacing a currency, regardless of the adopted scheme. Therefore, there is a need to provide an offline function that enables a transaction like cash even in an offline state in which a connection of a network 100 is unstable or disconnected. In the disclosure below, an implementation scheme of an offline digital currency will be proposed, on the premise of a CBDC of the retail scheme, in case the implementation is a "token-based" implementation in which guaranteeing anonymity of a user is easier, that is, in case each individual user holds his or her own BCK pair and operates as a node. However, the proposal in the disclosure is not necessarily specified to a CBDC of the retail scheme but may also be applicable to a CBDC of the wholesale scheme.

At least one electronic devices 110 and 130 may include a first electronic device 110 in an online state capable of accessing the operating server 120 through the network 100. The first electronic device 110 may, e.g., operate in an online state in case long-distance communication is possible. At least one electronic devices 110 and 130 may include a second electronic device 130 in an offline state incapable of accessing the operating server 120 through the network 100. The second electronic device 130 may, e.g., operate in an offline state in case long-distance communication is not possible. The first electronic device 110 may transition to an operation in the offline state in a shadow area in which long-distance communication is not possible.

At least one electronic devices 110 and 130 may record, in an embedded chip, a held quantity of a digital currency (hereinafter, referred to as an "online digital currency" or a "coin") to be used in an online state and/or a held quantity of a digital currency (hereinafter, referred to as an "offline digital currency" or a "token") to be used in an offline state. The embedded chip may be various, e.g., a trusted execution environment (TEE), an embedded secure element (eSE), a secure element (SE) IC, a subscriber identification module (SIM) card, or an embedded subscriber identification module (eSIM).

The first electronic device 110 may execute a wallet App of a personal account that manages an online digital currency, and perform, through the executed wallet App, a transaction operation (hereinafter, referred to as an "online transaction operation") using the online digital currency. The online transaction operation may include, e.g., an operation for paying a digital currency for purchasing an article, or transferring a digital currency to another account, based on the network 100 (e.g., based on long-distance communication).

The first electronic device 110 may perform offline tokenization through the executed wallet App in the online state. The first electronic device 110 may, e.g., perform offline tokenization to exchange an online digital currency for an offline digital currency.

The first electronic device 110 may execute a wallet App of a personal account in the offline state and perform a transaction operation (hereinafter, referred to as an "offline transaction operation") using an offline digital currency being managed by the executed wallet App. The offline transaction operation may include, e.g., an operation for paying a digital currency for purchasing an article at a second electronic device 130 or transferring a digital currency to a user account of the second electronic device 130, based on short-range communication. The short-range communication may use, as a standard protocol, a communication protocol such as near field communication (NFC), ultra-wideband (UWB), Bluetooth, wireless fidelity (WiFi) direct, or infrared data association (IrDA).

The first electronic device 110 may perform online tokenization through the executed wallet App in the online state. The first electronic device 110 may, e.g., perform online tokenization to exchange an offline digital currency of a quantity unit changed due to the offline transaction operation for an online digital currency. The quantity unit of the offline digital currency due to the offline transaction operation may increase or decrease. In case the offline transaction has not occurred, the quantity unit of the offline digital currency may not change.

The first and/or the second electronic devices 110 and 130 may include a user terminal (e.g., a smart phone, a mobile phone, or a tablet device) portable by a user, a computer device, a portable multimedia device, a portable medical device, a camera, a wearable device, or a home appliance device. The electronic device in this document is not limited to the above-described devices. In the first and/or second electronic devices 110 and 130, an application for providing various functions may be installed. The first and/or second electronic devices 110 and 130 may execute the installed application in response to manipulation of a user. The first and/or second electronic devices 110 and 130 may display information according to the execution of the application through a display.

According to an example, the electronic devices 110 and 130 that perform an operation for an offline transaction, an online transaction, offline tokenization and/or online tokenization may include an IC card or a smart card in which an IC chip is embedded or attached. Information for an offline transaction, an online transaction, offline tokenization and/or online tokenization may be recorded in the IC chip. The IC chip may serve as a physical digital wallet that supports digital transaction. The IC card or the smart card may, e.g., support an offline transaction based on tagging to a device such as a radio frequency identification (RFID) reader.

The operating server 120 may be a server operated by a management institution that manages an offline digital currency, such as a government or a central bank, or by a separate institution to which authority is delegated from the management institution. The operating server 120 may perform an operation according to offline tokenization and/or online tokenization. The operating server 120 may have authority to issue an OTK pair per personal account. The OTK pair may be an asymmetric key including a private key and a public key. The operating server 120 may, e.g., issue the OTK pair by a scheme similar to a scheme in which an individual is issued a key and/or a certificate from a certificate authority (CA). The private key constituting the OTK pair may, e.g., be used for the first electronic device 110 to sign predetermined information for offline tokenization request. The predetermined information may include a token ID and/or a public key constituting a BCK pair. The predetermined information may include a token ID and/or a value derived from a public key constituting a BCK pair. A TS for offline tokenization request may be generated by signing the token ID, quantitative information of a digital currency to be issued by offline tokenization, and/or the public key constituting the BCK pair (or the value derived from the public key), using the private key constituting the OTK pair. The operating server 120 may map and register an OTK pair to a BCK pair per account and/or individual.

<Table 1> below shows an example in which an OTK pair is mapped and registered to a BCK pair.

**[Table 1]**

| Block chain key or address | Offline tokenization key |
|---|---|
| Public key of BCK_A | Public key of OTK_A |
| Public key of BCK_B | Public key of OTK_B |
| Public key of BCK_C | Public key of OTK_C |
| Public key of BCK_D | Public key of OTK_D |

The mapping table of <Table 1> shows an example in which a public key of a BCK pair and a public key of an OTK pair are mapped. However, according to an implementation example, a value derived from a public key or a block chain address of the BCK pair may be applied. In the case of the OTK pair, a value derived from a public key or a certificate may be mapped as information capable of a one-to-one correspondence. The value derived from the public key may be, for example, a hash value of the public key. The operating server 120 may checkthe mapping of an address on a block chain for a corresponding account and/or individual with the public key of the OTK pair.

The operating server 120 holds an account on a block chain and may solely invoke an offline tokenization smart contract to perform offline tokenization. The operating server 120 may determine an address capable of invoking and driving the corresponding smart contract in case distributing a smart contract based on a block chain technology. The operating server 120 may issue an offline digital currency, i.e., a token, in case a request by the first electronic device 110 is valid. The operating server 120 may, e.g., allow a key (hereinafter, referred to as an "OTAK pair") for issuance of the OTK pair and/or issuance of the offline digital currency to be protected in a secure device such as a hardware security module (HSM).

The operating server 120 may support an online transaction operation, such as an operation for paying digital currency for purchasing an article or using a service, or transfer of a digital currency to another account in response to an online transaction request of the first electronic device 110 in an online state. The operating server 120 may support offline tokenization for issuing an online digital currency of a corresponding account as an offline digital currency in response to an offline tokenization request of the first electronic device 110 in an online state. The operating server 120 may support online tokenization for updating a remaining quantity of an offline digital currency of a corresponding account and to issue an offline digital currency corresponding to a part or all of the remaining quantity as an online digital currency in response to online tokenization request of the first electronic device 110 in an online state.

In the digital currency operating system 10, a transaction between individuals, who own addresses on a block chain and a key pair (a pair of a private key and a public key), may be recorded in a distributed ledger. In the digital currency operating system 10, generating a key pair (e.g., an OTK pair and/or a BCK pair) per account and/or individual and an address unique per individual on a block chain may be referred to as "account generation" or "wallet generation." In case the key pair (e.g., the OTK pair and/or the BCK pair) is generated, the electronic devices 110 and 130 included in the digital currency operating system 10 may generate a transaction on a block chain by using the key pair, and send or receive an online digital currency with another person.

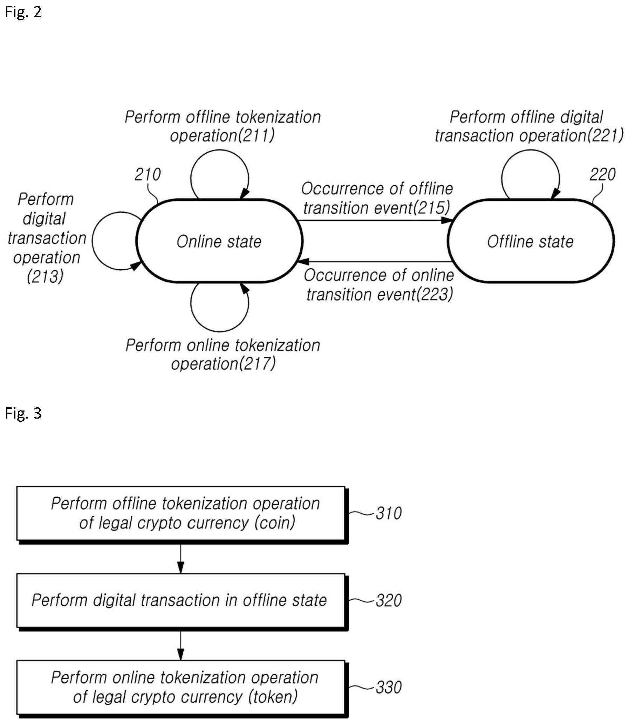

FIG. 2 is a diagram illustrating an offline tokenization or online tokenization in a digital currency operating system (e.g., the digital currency operating system 10 of FIG. 1) according to an embodiment of the disclosure.

Referring to FIG. 2, the digital currency operating system 10 may perform a digital transaction operation 213 using a digital currency in an online state 210. The online state 210 may be, for example, a state in which a digital transaction through a network (e.g., the network 100 of FIG. 1) is possible.

According to an example, the digital currency operating system 10 may perform digital transaction operation 213 using an online digital currency in the online state 210. For example, the digital currency operating system 10 may generate a transaction on a block chain and perform an online transaction operation for transferring an online digital currency between nodes. The transaction may occur, for example, in response to a transaction request such as purchasing an article, using a service, or transferring.

According to an example, the digital currency operating system 10 may perform a digital transaction operation 213 using an offline digital currency in the online state 210. For example, even in the online state 210, an electronic device (e.g., the first electronic device 110 of FIG. 1) holding an offline digital currency may establish a direct communication link with another electronic device (e.g., the second electronic device 130 of FIG. 1) and perform an offline transaction through the direct communication link. For example, an electronic device in the online state 210 holding an offline digital currency may provide a user interface for selecting a type of digital transaction on a wallet App. In case an offline transaction is selected through the user interface, the electronic device may perform an offline transaction operation using an offline digital currency. In case an online transaction is selected through the user interface, the electronic device may perform an online transaction operation using an online digital currency.

The digital currency operating system 10 may perform offline tokenization 211 in the online state 210. The offline tokenization may be an operation of converting an online digital currency into an offline digital currency. In case an offline tokenization request for a conversion quantity (e.g., an amount) of one or more token units (or currency units) for offline tokenization is triggered, the digital currency operating system 10 may perform offline tokenization for each of combinations of the token unit and the conversion quantity by using a token ID corresponding to the offline request. Offline tokenization for each of the combinations of the token unit and the conversion quantity may be performed independently. Offline tokenization for each of the combinations of the token unit and the conversion quantity may be performed sequentially. Offline tokenization for each of the combinations of the token unit and the conversion quantity may be performed in parallel or in a batch.

For example, tokens corresponding to the offline digital currency may be classified into a token A (or one (1) offline token) corresponding to a unit token, a token B (or five (5) offline tokens) having a token unit corresponding to five unit tokens, a token C (or ten (10) offline tokens) having a token unit corresponding to ten unit tokens, or a token D (or thirty (30) offline tokens) having a token unit corresponding to thirty unit tokens. In this case, the token unit may be 1, 5, 10, or 30. Therefore, one token B having a token unit of five has a quantity corresponding to five tokens A having a token unit of one, one token C having a token unit of 10 has a quantity corresponding to two tokens B or a quantity corresponding to ten tokens A, and one token D having a token unit of 30 has a quantity corresponding to three tokens C, a quantity corresponding to six tokens B, or a quantity corresponding to thirty tokens A. The conversion quantity may correspond to a number to be issued per token unit through offline tokenization.

According to an example, in case an offline tokenization request applying for issuance of five tokens A, one token B, and two tokens C occurs, the digital currency operating system 10 may perform an offline tokenization for issuing eight tokens in response to the offline tokenization request. In other words, the digital currency operating system 10 may perform offline tokenization five times for issuing five tokens A, may perform offline tokenization one time for issuing one token B and may perform offline tokenization two times for issuing two tokens C. Offline tokenization for issuing eight tokens may be performed independently. Offline tokenization for issuing eight tokens may be performed sequentially. Offline tokenization for issuing eight tokens may be performed in parallel or in a batch. Among offline tokenization for issuing eight tokens, some operations may be performed independently, and the remaining operations may be performed in parallel or in a batch.

In case offline tokenization are performed eight times and completed, in the digital currency operating system 10, five tokens A, one token B, and two tokens C may be finally issued corresponding to one offline tokenization request to which one token ID is allocated.

In case an offline transition event 215 occurs in the online state 210, the digital currency operating system 10 may transition to an offline state 220 and perform an offline digital transaction operation 221 using an offline digital currency. The offline transition event may occur by access to the network 100 being blocked or by blocking access to the network 100 by itself. For example, in the offline transaction operation, an electronic device (e.g., the first electronic device 110 of FIG. 1) holding an offline digital currency may establish a direct communication link with another electronic device (e.g., the second electronic device 130 of FIG. 1) and perform an offline transaction through the direct communication link.

In case an online transition event 223 occurs in the offline state 220, the digital currency operating system 10 may transition to the online state 210 and perform online tokenization 217. The online transition event may occur by access to the network 100 being resumed, or by allowing access to the network 100 by itself. Online tokenization may be an operation for converting an offline digital currency into an online digital currency. In case an online tokenization request for a conversion quantity (e.g., an amount) of one or more token units (or currency units) for online tokenization is triggered, the digital currency operating system 10 may perform online tokenization for each of combinations of the token unit and the conversion quantity. Online tokenization for each of the combinations of the token unit and the conversion quantity may be performed independently. Online tokenization for each of the combinations of the token unit and the conversion quantity may be performed sequentially. Online tokenization for each of the combinations of the token unit and the conversion quantity may be performed in parallel or in a batch. Among online tokenization for each of the combinations of the token unit and the conversion quantity, some operations may be performed independently, and the remaining operations may be performed in parallel or in a batch.

For example, in case an online tokenization request for three tokens A (one offline token), one token B (five offline tokens), and one token C (10 offline tokens) occurs, the digital currency operating system 10 may perform online tokenization for issuing five tokens as an online digital currency in response to the online tokenization request. In other words, the digital currency operating system 10 may perform online tokenization three times for issuing three coins A (one online coin), may perform online tokenization one time for issuing one coin B (five online coins), and may perform online tokenization one time for issuing one token C (10 online coins). In case online tokenization of the five times are completed, the digital currency operating system 10 may finally issue three coins A, one coin B, and one coin C.

FIG. 3 is a flowchart illustrating offline tokenization and/or online tokenization for a legal crypto currency in a digital currency operating system (e.g., the digital currency operating system 10 of FIG. 1) according to an embodiment of the disclosure.

In the following embodiments, the respective operations may be performed sequentially but are not necessarily performed sequentially. For example, the order of the respective operations may be changed, and at least two operations may be performed in parallel.

Referring to FIG. 3, the digital currency operating system 10 may perform offline tokenization for legal crypto currency (or an online digital currency or a coin) 310. Offline tokenization may be an operation of converting an online digital currency into an offline digital currency.

More specifically, in case an offline tokenization request for a conversion quantity (e.g., an amount) of one or more token units (or currency units) for offline tokenization is made, the digital currency operating system 10 may perform offline tokenization for each of combinations of the token unit and the conversion quantity by using a token ID corresponding to the offline request. Offline tokenization for each of the combinations of the token unit and the conversion quantity may be performed independently. The offline tokenization for each of the combinations of the token unit and the conversion quantity may be performed sequentially. Offline tokenization for each of the combinations of the token unit and the conversion quantity may be performed in parallel or in a batch. Among offline tokenization for each of the combinations of the token unit and the conversion quantity, some operations may be performed independently, and the remaining operations may be performed in parallel or in a batch.

The tokens, which are the offline digital currency, may be obtained through the offline tokenization. The tokens obtainable through offline tokenization may have token units different from each other. For example, the offline digital currency may include a token A (or one offline token) that is a unit token, the offline digital currency may include a token B (or five offline tokens) having a token unit corresponding to five unit tokens. The offline digital currency may include a token C (or 10 offline tokens) having a token unit corresponding to ten unit tokens. The offline digital currency may include a token D (or 30 offline tokens) having a token unit corresponding to thirty unit tokens. In other words, the token unit may be 1, 5, 10, or 30.

In the event that an offline tokenization request for five tokens A, one token B, and two tokens C is made, for example, the digital currency operating system 10 may sequentially or in parallel perform offline tokenization corresponding to eight times, which is the number of all the combinations. The digital currency operating system 10 may perform offline tokenization five times to issue five tokens A. The digital currency operating system 10 may perform offline tokenization one time to issue one token B. The digital currency operating system 10 may perform offline tokenization two times to issue two tokens C. In case the above-described offline tokenization is performed eight times and completed, the digital currency operating system 10 may finally issue five tokens A, one token B, and two tokens C in response to one offline tokenization request to which one token ID is allocated.

The digital currency operating system 10 may invoke an offline tokenization smart contract to generate a smart contract corresponding to the requested token ID. The digital currency operating system 10 may issue a new address of the smart contract at the time of generating the smart contract. The offline tokenization smart contract may check the requested content according to a program, check a balance at an address on a block chain (or an address of a smart contract) corresponding to a corresponding online account, and perform lock processing to prevent a transaction of an amount for which offline tokenization is requested among the checked balance. The digital currency operating system 10 may generate a smart contract corresponding to an offline digital currency and containing conditions capable of re-activating a transaction of the corresponding amount and distribute an address of the generated smart contract on a block chain. In this case, the address of the smart contract may be shared by nodes constituting the block chain. For example, in case of transferring a token, an offline digital currency, to the electronic device 110, the operating server 120 may distribute the address of the smart contract on the block chain. The operating server 120 may also transfer to the electronic device 110 that requested offline tokenization, an address of a smart contract newly issued by offline tokenization for obtaining the token together with the token that is the offline digital currency.

The digital currency operating system 10 may perform an online transaction operation using an online digital currency and/or an offline transaction operation using an offline digital currency 320. For example, the digital currency operating system 10 may support an offline transaction operation that allows an electronic device (e.g., the first electronic device 110 of FIG. 1) holding an offline digital currency to establish a direct communication link with another electronic device (e.g., the second electronic device 130 of FIG. 1) and to perform an offline transaction through the direct communication link. For example, the digital currency operating system 10 may support an online transaction operation that allows an electronic device (e.g., the first electronic device 110 of FIG. 1) holding an online digital currency to establish a communication link with another electronic device (e.g., the second electronic device 130 of FIG. 1) online and to perform an online transaction through the communication link.

According to an example, the digital currency operating system 10 may perform an offline transaction in which the first electronic device 110 and the second electronic device 130 send and receive a token that is an offline digital currency in an offline state. For example, in case it is intended to transfer a token that is an offline digital currency corresponding to a certain amount to the second electronic device 130, the first electronic device 110 may execute a wallet App that is its own account, and select, on the executed wallet App, tokens corresponding to one token that is a predetermined token unit or to a combination of a plurality of token units so as to reach the certain amount. The first electronic device 110 may transfer the selected tokens to the second electronic device 130. The first electronic device 110 may provide, to the second electronic device 130, an address of a smart contract transferred by the operating server 120 in response to an offline tokenization request.

The first electronic device 110 may, for example, in case it is intended to transfer amount X, select one token whose token unit is X. The first electronic device 110 may, for example, in case it is intended to transfer amount X, select X unit tokens. The first electronic device 110 may, in case selection of tokens corresponding to amount X to be transferred is completed, establish a direct communication link of the second electronic device 130, and transfer the selected token to a wallet according to an account of the second electronic device 130 through the established direct communication link.

As described above, the offline transaction may perform a transaction of a token even in an offline state in which a connection with the network 100 is disconnected for both wallets of the first electronic device 110 and the second electronic device 130. However, the offline transaction may also be performed as necessary even in an online state. Since the offline transaction is made between devices (e.g., between wallets) in a state in which a connection with the network 100 is not made, not only may details of the transaction be unknown, but tracking may also be impossible. Therefore, the tokens transferred to the second electronic device 130 by the first electronic device 110 may spread to a plurality of accounts through one time or several times of offline transactions. Electronic devices corresponding to the plurality of accounts may perform online tokenization on the tokens obtained through the offline transaction in an online state.

According to an example, the digital currency operating system 10 may perform an online transaction in which the first electronic device 110 and the second electronic device 130 send and receive a coin that is an online digital currency in an online state. For example, in case it is intended to transfer a coin that is an online digital currency corresponding to a certain amount to the second electronic device 130, the first electronic device 110 may execute a wallet App that is its own account, and select, on the executed wallet App, a quantity of coins corresponding to the certain amount. The first electronic device 110 may, in case coins of a quantity to be transferred are selected, establish a communication link with the second electronic device 130 online, and transfer the coins of the selected quantity to a wallet according to an account of the second electronic device 130 through the established communication link.

According to an example, the digital currency operating system 10 may perform an offline transaction in which the first electronic device 110 and the second electronic device 130 send and receive a token that is an offline digital currency in an online state. For example, in case it is intended to transfer a token that is an offline digital currency corresponding to a certain amount to the second electronic device 130, the first electronic device 110 may execute a wallet App that is its own account, and select, on the executed wallet App, a quantity of tokens corresponding to the certain amount. The first electronic device 110 may, in case tokens of a quantity to be transferred are selected, establish a direct communication link with the second electronic device 130, and transfer the tokens of the selected quantity to a wallet according to an account of the second electronic device 130 through the established direct communication link.

The digital currency operating system 10 may perform online tokenization on a predetermined offline digital currency 330, that is, remaining tokens, in an online state. In case an online tokenization request for a conversion quantity (e.g., an amount) of one or more token units (or currency units) for online tokenization is made, the digital currency operating system 10 may perform independent online tokenization for each of combinations of the token unit and the conversion quantity. Online tokenization for each of the combinations of the token unit and the conversion quantity may be performed independently. Online tokenization for each of the combinations of the token unit and the conversion quantity may be performed sequentially. Online tokenization for each of the combinations of the token unit and the conversion quantity may be performed in parallel or in a batch. Among online tokenization for each of the combinations of the token unit and the conversion quantity, some operations may be performed independently, and the remaining operations may be performed in parallel or in a batch.

For example, in case an online tokenization request for three tokens A (one offline token), one token B (five offline tokens), and one token C (10 offline tokens) is made, the digital currency operating system 10 may perform online tokenization for issuing five tokens as an online digital currency in response to the online tokenization request. In other words, the digital currency operating system 10 may perform online tokenization three times to issue three coins A (one online coin), may perform online tokenization one time to issue one coin B (five online coins), and may perform online tokenization one time to issue one token C (10 online coins). In case online tokenization of the five times are completed, the digital currency operating system 10 may finally issue three coins A, one coin B, and one coin C.

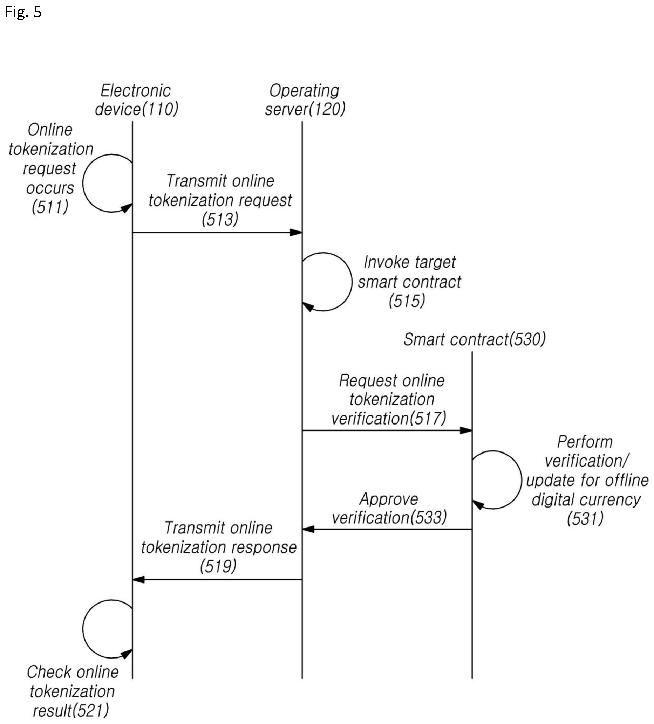

A specific operation according to online tokenization of a legal crypto currency performed in the digital currency operating system 10 will be described in detail below with reference to FIG. 5.

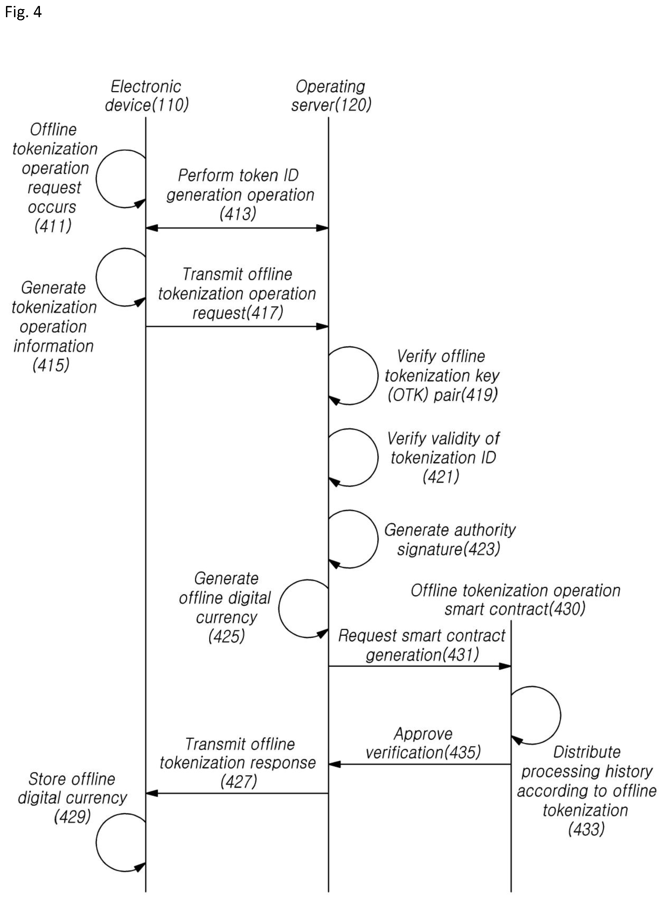

FIG. 4 is a signal flow diagram for illustrating tokenization operation in a digital currency operating system (e.g., the digital currency operating system 10 of FIG. 1) according to an embodiment of the disclosure.

In the following embodiments, the respective operations may be performed sequentially but are not necessarily performed sequentially. For example, the order of the respective operations may be changed, and at least two operations may be performed in parallel.

Referring to FIG. 4, the electronic device 110 may determine whether an offline tokenization request occurs 411. A form of a wallet for managing a digital currency may be variously implemented according to a type of the electronic device 110. The electronic device 110 may be provided in various forms, such as a smart phone, a smart watch, or an IC card. Among the examples of the electronic device 110, a smart watch or an IC card, in which a user interface is relatively limited due to a size of a display, may access a wallet App of a smart phone that has relatively no constraint on a display, through a communication link established with the smart phone based on a direct communication scheme (e.g., Bluetooth low energy (BLE), NFC, or UWB). In this case, a user may trigger an offline tokenization request by using information of a wallet displayed on the display of the smart phone.

For example, the electronic device 110 may execute a wallet App, and output, through an execution screen of the wallet App, an address on an online or block chain held by a corresponding account and/or an individual and balance of an online digital currency. The electronic device 110 may, in case an offline menu is selected on the execution screen of the wallet App, proceed with an offline tokenization request for a part or all of the balance of the online digital currency. The electronic device 110 may determine a conversion amount of a token for which offline tokenization is to proceed. The user may input the conversion amount of the token for which offline tokenization is to proceed on the execution screen of the wallet App. The conversion amount of the token for which offline tokenization is to proceed may be input by selection of a token unit and/or a conversion quantity. The conversion quantity may be the number of tokens having a corresponding token unit.

The electronic device 110 may, e.g., in case an offline tokenization request for a conversion quantity (e.g., an amount) of one or more token units (or currency units) for offline tokenization is made, perform offline tokenization for each of combinations of the token unit and the conversion quantity by using a token ID corresponding to the offline request. Offline tokenization for each of the combinations of the token unit and the conversion quantity may be performed independently. Offline tokenization for each of the combinations of the token unit and the conversion quantity may be performed sequentially. Offline tokenization for each of the combinations of the token unit and the conversion quantity may be performed in parallel or in a batch. Among offline tokenization for each of the combinations of the token unit and the conversion quantity, some operations may be performed independently, and the remaining operations may be performed in parallel or in a batch.

For example, the tokens corresponding to the offline digital currency may be classified into a token A (or one offline token) corresponding to a unit token, a token B (or five offline tokens) having a token unit corresponding to five unit tokens, a token C (or 10 offline tokens) having a token unit corresponding to ten unit tokens, or a token D (or 30 offline tokens) having a token unit corresponding to thirty unit tokens. In this case, the token unit may be 1, 5, 10, or 30. Therefore, one token B whose token unit is 5 has a quantity corresponding to five tokens A whose token unit is one, one token C whose token unit is 10 has a quantity corresponding to two tokens B or a quantity corresponding to ten tokens A, and one token D whose token unit is 30 has a quantity corresponding to three tokens C, a quantity corresponding to six tokens B, or a quantity corresponding to thirty tokens A. The conversion quantity may correspond to the number to be issued per token unit through offline tokenization.

The electronic device 110 may, in case the offline tokenization request is made, generate a token ID 413. The token ID may be used to generate a TBS offline token. For example, the electronic device 110 may randomly generate a token ID. To this end, the electronic device 110 may prepare a generation formula for randomly generating a token ID. The electronic device 110 may send a query to a specific smart contract provided by the operating server 120 to be issued a valid token ID. The electronic device 110 may determine whether a token ID randomly generated in a user wallet is valid by sending a query to a predetermined smart contract provided by the operating server 120. The electronic device 110 may use the token ID verified by the predetermined smart contract. The electronic device 110 may check validity of a token ID randomly generated in the user wallet, based on details of a distributed ledger.

The electronic device 110 may generate tokenization operation information 415. The electronic device 110 may, e.g., generate the tokenization operation information by using a TBS offline token. The electronic device 110 may include the tokenization operation information in an offline request message and transmit the offline request message 417 to the operating server 120. For example, the electronic device 110 may use an OTK pair allocated to a user for a signature included in the TBS offline token. The user may also be issued an OTK pair and a BCK pair at the time of issuance of a wallet. The OTK pair and/or the BCK pair may have a form of an asymmetric key including a private key and a public key. The electronic device 110 may transmit to the operating server 120 an offline tokenization request message including the TBS offline token.

<Table 2> below defines an example of the offline tokenization request message.

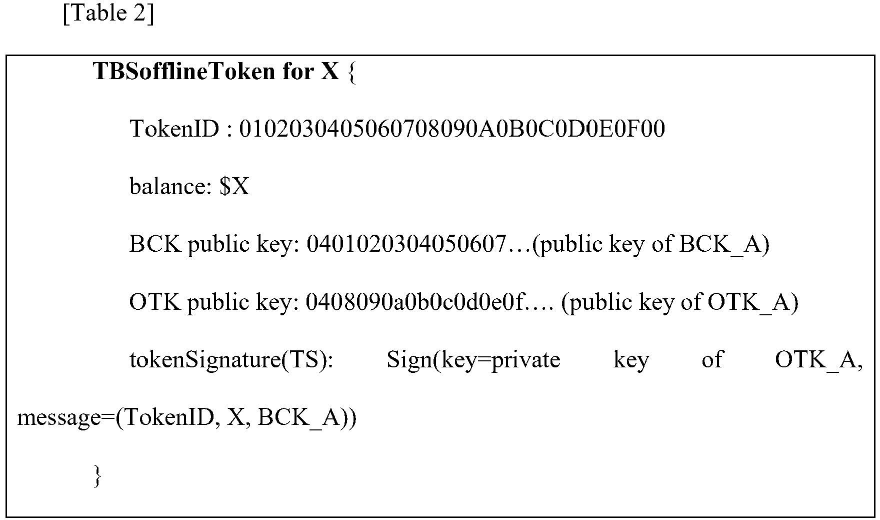

In <Table 2>, the offline tokenization request message may include, as a TBS offline token, a token ID, quantitative information of a digital currency to be issued by offline tokenization, a token unit (or currency unit) (X) to be issued by performing offline tokenization, a public key of a BCK pair, a public key of an OTK pair, or a TS. The TS may be generated by performing signing on a token ID, token information for offline tokenization, and a public key of a BCK pair (or a value derived from the public key) by a private key of an OTK pair. The token information for offline tokenization may include quantitative information of a digital currency to be issued by offline tokenization. The token information for the offline tokenization may, e.g., include information about a token unit (or currency unit) (X) to be obtained through offline tokenization. The token information for offline tokenization may, e.g., include information about a quantity of tokens to be obtained through offline tokenization. The operating server 120 may receive TBS offline tokens 417 from the electronic device 110. The received TBS offline tokens may have the same token ID. The operating server 120 may perform verification of an OTK pair of the received TBS offline tokens 419. The electronic device 120 may, e.g., inquire about an issuance history of an OTK pair and check whether mapping of the OTK pair and a BCK pair transferred from the electronic device 110 for the offline tokenization request is correct. The operating server 120 may, in the event that a certificate for the OTK pair exists, perform verification of the OTK pair 419 through the certificate. This may differ according to an issuance scheme of the OTK pair.

The operating server 120 may check validity of a token ID 421. The operating server 120 may, in case a tokenization ID used for the TBS offline tokens has been used before or a history of duplicate use with a token ID that has been used exists, reject the offline tokenization request. The operating server 120 may reject the offline tokenization request also in case a balance registered at an address opened by a user on a block chain is insufficient to issue tokens of a quantity for which offline tokenization is requested. The electronic device 110 may verify the signature of a TS included in the TBS offline tokens.

In case all the above-described verification conditions are all satisfied, the operating server 120 may perform offline tokenization to generate a token that is a desired offline digital currency. However, in case any one of the verification conditions is not satisfied, the operating server 120 may reject the offline tokenization request.

The operating server 120 may, in case all verification conditions are all satisfied, generate an AS 423. The operating server 120 may, for example, in case all verification conditions are all satisfied, request generation of an AS for all the TBS offline tokens through a key management system such as a linked HSM. The key management system such as the HSM may generate an AS for all the TBS offline tokens by using an OTAK in response to a request from the operating server 120.

The operating server 120 may receive an AS from the key management system, and generate signed token 425 that is a signed offline digital currency by using the received AS.

<Table 3> below defines an example of a signed token that is a signed offline digital currency to be included in an offline tokenization response message.

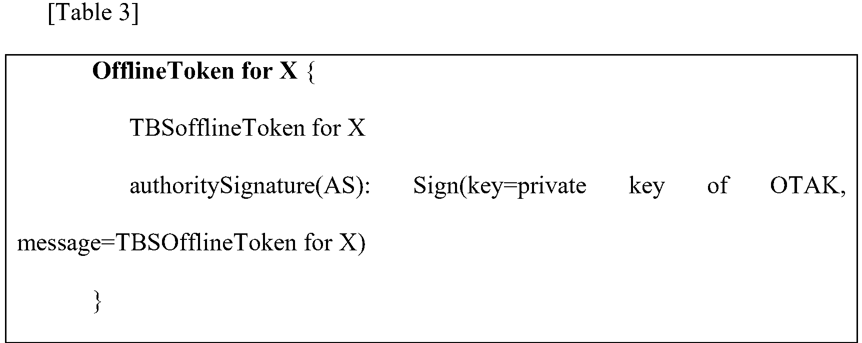

In <Table 3>, the offline tokenization response message may include, as a signed offline digital currency (offline token), a TBS offline token and an AS. The AS may be generated by signing the TBS offline token by a private key of an OTAK. The operating server 120 may request generation of a smart contract corresponding to a specific offline digital currency. The operating server 120 may invoke the offline tokenization smart contract 430 to request generation of a smart contract 431 corresponding to the requested token ID.

The offline tokenization smart contract 430 may check requested content according to a program to check a balance at an address on a block chain corresponding to a corresponding online account and perform lock processing to prevent a transaction of an amount for which offline tokenization is requested among the checked balance. Together with this, the offline tokenization smart contract may generate a smart contract corresponding to an offline digital currency containing conditions capable of reactivating the transaction of the corresponding amount and distribute an address of the smart contract 433 according to the generation on the block chain. The distributed address of the smart contract may be shared with nodes constituting the block chain. The offline tokenization smart contract 430 may transfer a verification result 435 made on a result of offline tokenization to the operating server 120.

The operating server 120 may transmit an offline response message 427 including the generated signed token that is a signed offline digital currency to the electronic device 110. The operating server 120 may transfer an address of a smart contract together with the signed token to the electronic device 110.

The electronic device 110 may receive the signed offline digital currencies (offline tokens) transmitted from the operating server 120. The electronic device 110 may store the received signed offline digital currencies (offline tokens) 429 in a secure area provided in a wallet of an eSE, a TZ, or an SE IC. The electronic device 110 may use the signed offline digital currencies (offline tokens) stored in the secure area at the time of an offline transaction.

The electronic device 110 may allow an address of a smart contract that is generated by an offline tokenization smart contract and then distributed to be included in information of the signed offline digital currency. This is for relatively more easily finding a smart contract to be invoked in case online tokenization is performed on the corresponding signed offline digital currency in the future.

FIG. 5 is a signal flow diagram illustrating online tokenization in a digital currency operating system (e.g., the digital currency operating system 10 of FIG. 1) according to an embodiment of the disclosure.

In the following embodiments, the respective operations may be performed sequentially but are not necessarily performed sequentially. For example, the order of the respective operations may be changed, and at least two operations may be performed in parallel.

Referring to FIG. 5, an electronic device (e.g., the first electronic device 110 of FIG. 1) may determine whether an online tokenization request occurs 511. The electronic device 110 may, for example, identify that an online tokenization request has occurred by an online tokenization request for a conversion quantity (e.g., an amount) of one or more token units (or currency units) for online tokenization being made.

The electronic device 110 may, in case the online tokenization request occurs, transmit an online tokenization request to an operating server 513 (e.g., the operating server 120 of FIG. 1). For example, the electronic device 110 may transmit an online tokenization request message to the operating server 120 for the online tokenization request. The electronic device 110 may, corresponding to a transaction according to the online tokenization request, request online tokenization by invoking a corresponding smart contract in the operating server 120. The online tokenization request may be made per token ID. The online tokenization request message may be signed by using a private key constituting a BCK pair allocated per account and/or per individual. The online tokenization request may also be made per quantity unit having the same token ID.

The operating server 120 may, in case the online tokenization request of the electronic device 110 is received, invoke a smart contract 530 of a token ID 515 corresponding to the online tokenization request. The operating server 120 may use an address of the smart contract 530 to be invoked in order to invoke the smart contract 530. The address of the smart contract may be generated and distributed by the operating server 120 at the time of issuing a token that is an offline digital currency by offline tokenization.

The operating server 120 may request online tokenization verification 517 from the invoked smart contract 530. The invoked smart contract 530 may perform verification of a signed token included in an online tokenization request message 531, for which online tokenization is to be performed. The invoked smart contract 530 may update information about an online digital currency 531 by performing online tokenization based on a verification result. The smart contract 530 may be programmed such that a transaction is performed according to predetermined conditions.

According to an example, the smart contract 530 corresponding to a corresponding token ID may perform verification according to the predetermined condition on a received offline token, and, in case the predetermined condition is not satisfied, reject the online tokenization request 533. For example, the smart contract 530 may perform verification of a token ID of the received offline token 531. The smart contract 530 may verify an account and/or a requester that has requested online tokenization 531. The account and/or the requester may be made through verification of a BCK pair. The smart contract 530 may perform verification of a TS and/or an AS included in the received token 531. The smart contract 530 may check whether the TS and/or the AS has a history in which online tokenization has been requested in advance or online tokenization has already been performed, based on details of previous online tokenization processing.

The smart contract 530 may release a use lock on a coin at an address corresponding to a BCK pair (BCK_A) recorded in a token that has passed verification of all conditions on a block chain, and generate a remittance transaction of a coin 531 according to online tokenization to an address corresponding to a BCK pair (BCK_B) allocated to an account and/or a user that has requested online tokenization. The BCK pair (BCK_A) recorded in the token may be a BCK pair allocated to an account and/or a user that has requested offline tokenization of the corresponding token.

The operating server 120 may transmit an online tokenization response message 519 including the result of performing online tokenization to the electronic device 110. The electronic device 110 may receive the online tokenization response message and check that a coin that is an online digital currency through online tokenization has increased in its own wallet 532 based on online tokenization processing result included in the online tokenization response message. The electronic device 110 may check that a token that is an offline digital currency through online tokenization has decreased in its own wallet 521 based on an online processing result included in the online tokenization response message.

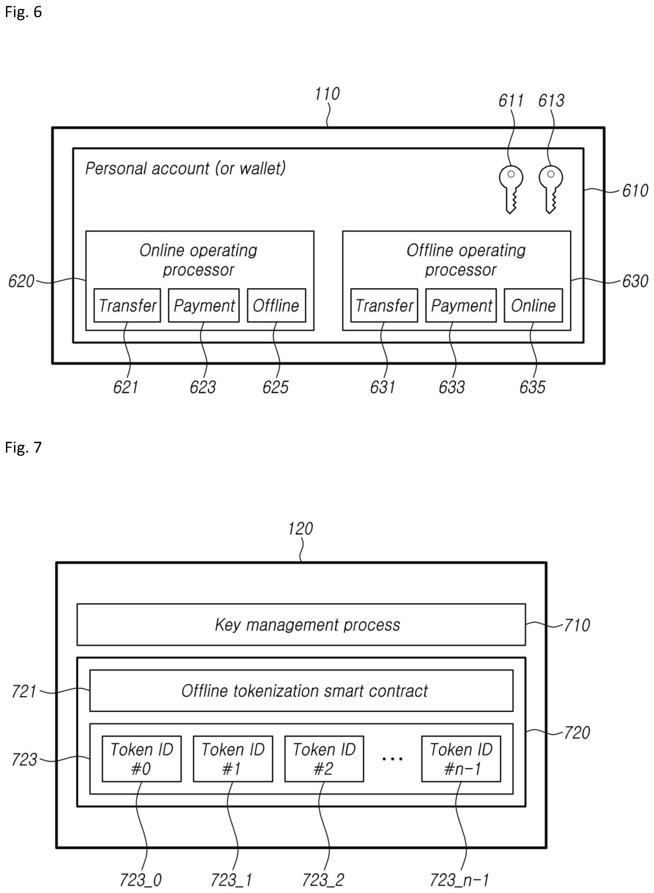

FIG. 6 is a configuration diagram of a processor for performing offline tokenization and/or online tokenization in an electronic device (e.g., the first electronic device 110 of FIG. 1) according to the disclosure of the present invention.

Referring to FIG. 6, the electronic device 110 may have a personal account (or a wallet) 610 for managing digital currency. The electronic device 110 may activate the personal account (or the wallet) 610 by executing a wallet App of a personal account. An OTK pair 611 or a BCK pair 613 may be stored in the personal account 610. For example, the personal account 610 may include a crypto account to store the OTK pair 611 or the BCK pair 613.

An online operating processor 620 or an offline operating processor 630 may be invoked and executed in the personal account 610. The online operating processor 620 may perform an online transaction using a stored online digital currency. The online transaction to be performed by the online operating processor 620 using the online digital currency may be performed by a transfer module 621 or a payment module 623. The online operating processor 620 may include an offline module 625 that performs offline tokenization for converting a coin that is an online digital currency into a token that is an offline digital currency. The offline operating processor 630 may perform an offline transaction using a stored offline digital currency. The offline transaction to be performed by the offline operating processor 630 using the offline digital currency may be performed by a transfer module 631 or a payment module 633. The offline operating processor 630 may include an online module 635 that performs online tokenization for converting a token that is an offline digital currency into a coin that is an online digital currency.

FIG. 7 is a configuration diagram of a processor for performing offline tokenization and/or online tokenization in an operating server (e.g., the operating server 120 of FIG. 1) according to the disclosure of the present invention.

Referring to FIG. 7, the operating server 120 may include a key management process 710 or a smart contract 720. The smart contract 720 may include an offline tokenization smart contract 721 or a smart contract for offline token 723. The smart contract for offline token 723 may be generated by the offline tokenization smart contract 721 per token ID.

The offline tokenization smart contract 721 may issue a smart contract (the following smart contract for a specific offline CBDC token) containing a condition that, in the event that a command satisfies a condition, locks a transaction of a certain amount of an online digital currency of a specific account and allows a lock of the corresponding online digital currency to be released. An account capable of invoking the offline tokenization smart contract 721 may be configured such that only an account of an offline tokenization authority is possible.

The smart contract for offline token 723 may exist one per token ID of an offline digital currency issued by the offline tokenization authority (723_0, 723_1, 723_2......, 723_n-1). The smart contract for offline token 723 may be programmed to perform online tokenization that converts an offline digital currency back into an online digital currency according to a condition. For example, the smart contract for offline token 723 may, in the event that an input matching a specific condition is received, release, after validity verification, a transaction lock of an online digital currency of an amount described in the input, among a total online digital currency that has been locked at an address of an online digital currency of a block chain account that has performed initial offline tokenization. The smart contract for offline token 723 may be programmed to release the transaction lock and transmit the corresponding digital currency to an address of an online digital currency of a block chain account that has invoked an online tokenization request.

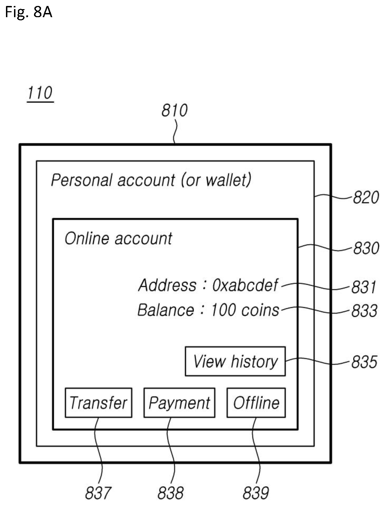

FIG. 8A is a diagram illustrating a user interface example for requesting offline tokenization in an electronic device (e.g., the first electronic device 110 of FIG. 1) according to an embodiment of the disclosure.

Referring to FIG. 8A, the electronic device 110 may execute a wallet App of a personal account that manages an online digital currency and display an execution screen 820 of the wallet App on a display 810. The execution screen 820 of the wallet App may be, for example, a screen about an online account (or a wallet). A screen 830 about an online account in the execution screen 820 of the wallet App may include an address 831 (e.g., Oxabcdef) generated corresponding to its own account on a block chain and a balance 833 (e.g., 100 coins) of a coin that is an online digital currency or function buttons. The function buttons may include a 'view history 835' function button for requesting transaction details of an online digital currency to be checked, a 'transfer 837' function button for requesting a transfer, a 'payment 838' function button for requesting a payment, or an 'offline 839' function button for requesting offline tokenization.

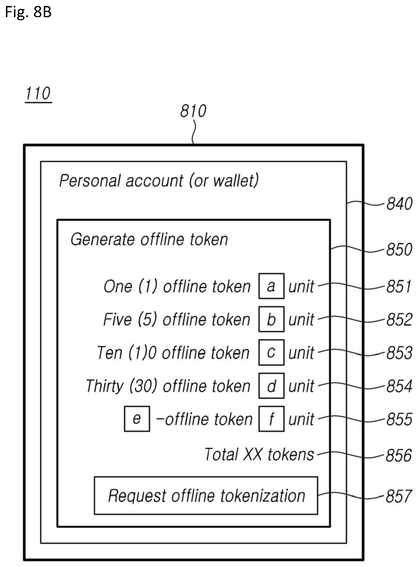

FIG. 8B is a diagram illustrating a user interface example for offline tokenization in an electronic device (e.g., the first electronic device 110 of FIG. 1) according to an embodiment of the disclosure.

Referring to FIG. 8B, the electronic device 110 may, in case a function button (e.g., the offline 839 of FIG. 8A) for requesting offline tokenization is selected, display a screen 840 for generating an offline token on the display 810. The offline token generation screen 840 may include a setting screen 850 capable of inputting a conversion quantity desired to be issued per token unit (or currency unit). The setting screen 850 may include, for example, items 851, 852, 853, 854, and 855 capable of inputting a conversion quantity per token unit desired to be issued by offline tokenization. The items 851, 852, 853, 854, and 855 capable of inputting the conversion quantity per token unit may include, for example, an item 851 to input a conversion quantity a of one offline token, an item 852 to input a conversion quantity b of a five offline token, an item 853 to input a conversion quantity c of a 10 offline token, an item 854 to input a conversion quantity d of a 30 offline token, or an item 855 to input a conversion quantity f of an arbitrary token unit e. The conversion quantity a, b, c, d, or f may be a positive integer including 0. The setting screen 850 may, e.g., include an item 856 that displays a total token amount summed based on the input conversion quantity per token unit. The setting screen 850 may include an 'offline tokenization request 857' a function button for requesting offline tokenization for the items 851, 852, 853, 854, and 855 capable of inputting the conversion quantity per token unit.

For example, in case the offline tokenization request 857 is selected, the electronic device 110 may perform offline tokenization for each of combinations of the token unit and the conversion quantity, by using a token ID corresponding to the offline request. Offline tokenization for each of the combinations of the token unit and the conversion quantity may be performed independently. Offline tokenization for each of the combinations of the token unit and the conversion quantity may be performed sequentially. Offline tokenization for each of the combinations of the token unit and the conversion quantity may be performed in parallel or in a batch. Among offline tokenization for each of the combinations of the token unit and the conversion quantity, some operations may be performed independently, and the remaining operations may be performed in parallel or in a batch.

For example, the electronic device 110 may perform offline tokenization to issue a predetermined number (a+b+c+d+f) of tokens in response to the offline tokenization request. The electronic device 110 may perform offline tokenization to issue the predetermined number (a+b+c+d+f) of tokens in response to the offline tokenization request sequentially, perform offline tokenization in parallel, or perform some of offline tokenization sequentially and perform some of offline tokenization in parallel. The electronic device 110 may perform an offline tokenization a number of time(s) to issue a number of unit(s) of one offline token. The electronic device 110 may perform an offline tokenization b number of times to issue b number of units of five offline tokens. The electronic device 110 may perform an offline tokenization c number of times to issue c number of units of 10 offline tokens. The electronic device 110 may perform an offline tokenization d number of times to issue d number of units of 30 offline tokens. The electronic device 110 may perform an offline tokenization f number of times to issue f number of units of e offline token(s).

In case the predetermined number of times (a+b+c+d+f) of offline tokenization is completed, the electronic device 110 may finally be issued a predetermined number (a+b+c+d+f) of tokens corresponding to one offline tokenization request to which one token ID is allocated.

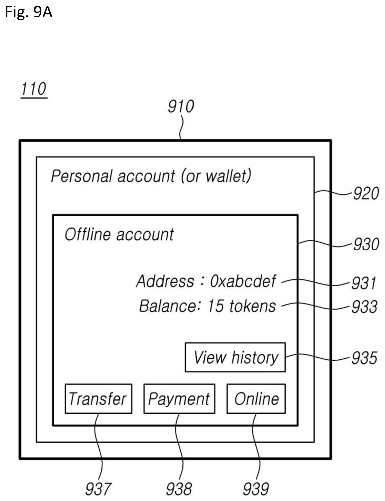

FIG. 9A is a diagram illustrating a user interface example for requesting online tokenization in an electronic device (e.g., the first electronic device 110 of FIG. 1) according to an embodiment of the disclosure.

Referring to FIG. 9A, the electronic device 110 may execute a wallet App of a personal account that manages an offline digital currency and display an execution screen 920 of the wallet App on a display 910. The execution screen 920 of the wallet App may be, for example, a screen about an offline account (or a wallet). A screen 930 about an offline account in the execution screen 920 of the wallet App may include an address 931 (e.g., Oxabcdef) generated corresponding to its own account on a block chain and a balance 933 (e.g., 15 tokens) of a token that is an offline digital currency or function buttons. The function buttons may include a 'view history 935' function button for requesting transaction details of an offline digital currency to be checked, a 'transfer 937' function button for requesting a transfer, a 'payment 938' a function button for requesting a payment, or an 'online 939' function button for requesting online tokenization.

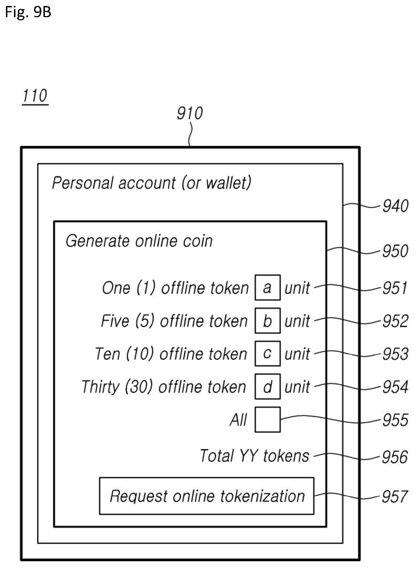

FIG. 9B is a diagram illustrating a user interface example for online tokenization in an electronic device (e.g., the first electronic device 110 of FIG. 1) according to an embodiment of the disclosure.

Referring to FIG. 9B, the electronic device 110 may display, in the event that a function button (e.g., the online 939 of FIG. 9A) for requesting online tokenization is selected, a screen 940 for generating an online token on the display 910. The online token generation screen 940 may include a setting screen 950 for inputting a conversion quantity for converting into a coin per token unit (or currency unit). The setting screen 950 may include, for example, items 951, 952, 953, 954, and 955 capable of inputting a conversion quantity per token unit to be converted into a coin by online tokenization. The items 951, 952, 953, 954, and 955 for inputting the conversion quantity per token unit may include, for example, an item 951 to input a conversion quantity a of a one offline token, an item 952 to input a conversion quantity b of a five offline token, an item 953 to input a conversion quantity c of a 10 offline token, an item 954 to input a conversion quantity d of a 30 offline token, or an item 955 capable of being selected to convert all remaining tokens in a batch. The conversion quantity a, b, c, or d may be a positive integer including 0. The setting screen 950 may include, for example, an item 956 that displays a total token amount summed based on the input conversion quantity per token unit. The setting screen 950 may include an 'online tokenization request 957' function button for requesting online tokenization for the items 951, 952, 953, 954, and 955 capable of inputting the conversion quantity per token unit.

For example, in the event that the online tokenization request 957 is selected, the electronic device 110 may perform online tokenization for each of combinations of the token unit and the conversion quantity. Online tokenization for each of the combinations of the token unit and the conversion quantity may be performed independently. Online tokenization for each of the combinations of the token unit and the conversion quantity may be performed sequentially. Online tokenization for each of the combinations of the token unit and the conversion quantity may be performed in parallel or in a batch. Among online tokenization for each of the combinations of the token unit and the conversion quantity, some operations may be performed independently, and the remaining operations may be performed in parallel or in a batch.

For example, the electronic device 110 may perform an online tokenization for converting a predetermined number (a+b+c+d) of tokens into a coin in response to the online tokenization request. The electronic device 110 may perform online tokenization for converting the predetermined number (a+b+c+d) of tokens into a coin in response to the online tokenization request sequentially, perform online tokenization in parallel, or perform some of online tokenization sequentially and perform some of online tokenization in parallel. The electronic device 110 may perform an online tokenization a number of time(s) for converting a number of unit(s) of one offline token into a coin. The electronic device 110 may perform an online tokenization b number of times for converting b number of units of five offline tokens into a coin. The electronic device 110 may perform an online tokenization c number of times for converting c number of units of 10 offline token into a coin. The electronic device 110 may perform an online tokenization d number of times for converting d number of units of 30 offline token into a coin. The electronic device 110 may perform, in the event that an item 955 for requesting online tokenization for all remaining tokens is selected, online tokenization for converting each of one or a plurality of remaining tokens into a coin.

A method for operating an electronic device according to an example may include obtaining a token ID corresponding to an offline tokenization request. For example, the operating method may include transmitting, to an operating server, a TBS offline token including a TS in which signing on the token ID, quantitative information of a digital currency to be issued by offline tokenization, and a public key of a predetermined BCK pair or a value derived from the public key is performed by a private key included in a predetermined OTK pair that is an asymmetric key for offline tokenization. For example, the operating method may include receiving, from the operating server, an offline digital currency (token) including an AS in which signing on the TBS offline token is performed by an OTAK. For example, the operating method may include updating offline digital currency information of a corresponding account based on the offline digital currency. For example, the AS may be generated by the operating server based on verification of the predetermined OTK pair, a validity check of the token ID, a balance of an online digital currency, and signature verification by the TS.

For example, the obtaining of the token ID may include randomly generating a candidate token ID, requesting validity verification of the candidate token ID from the operating server, and determining the candidate token ID as the token ID based on a result of the validity verification of the candidate token ID by the operating server.

For example, the obtaining of the token ID may include randomly generating a candidate token ID, checking validity of the candidate token ID based on details of a distributed ledger, and determining the candidate token ID as the token ID based on a result of the checking of the validity of the candidate token ID.

For example, the operating method may include obtaining the predetermined OTK pair and the predetermined BCK pair in response to a request for generating the corresponding account.

For example, the operating method may include obtaining, for the offline tokenization request, the quantitative information capable of predicting an amount of the offline digital currency to be issued by offline tokenization.

For example, the operating method may include outputting an offline tokenization result based on the updated offline digital currency information.

For example, the operating method may include establishing a direct communication link with a counterpart electronic device in a situation in which a connection to a block chain network is blocked, transferring a part or all of the offline digital currency stored in the corresponding account to the counterpart electronic device through the direct communication link in response to an offline transaction request, updating the offline digital currency information of the corresponding account based on the transferred offline digital currency, and releasing the direct communication link.

For example, the operating method may include establishing a direct communication link with a counterpart electronic device in a situation in which a connection to a block chain network is blocked, receiving a predetermined offline digital currency from the counterpart electronic device through the direct communication link in response to an offline transaction request, updating the offline digital currency information of the corresponding account based on the predetermined offline digital currency, and releasing the direct communication link.

For example, the operating method may include receiving an online tokenization request for a part or all the offline digital currency stored in the corresponding account, and transmitting a target offline digital currency for online tokenization to the operating server in response to the online tokenization request.

For example, the target offline digital currency may be generated such that the operating server is able to obtain at least one of the token ID, the predetermined BCK pair, the TS, or the AS.

For example, the operating method may include receiving online tokenization processing result from the operating server, and outputting online digital currency information in an account updated based on the online tokenization processing result.

A method for operating an operating server according to an example may include receiving, from an electronic device, a TBS offline token including a TS in which signing on a token ID, quantitative information of a digital currency to be issued by offline tokenization, and a public key of a predetermined BCK pair or a value derived from the public key is performed by a private key included in a predetermined OTK pair that is an asymmetric key for offline tokenization. For example, the operating method may include generating an AS in which signing on the TBS offline token is performed by an OTAK. For example, the operating method may include transmitting an offline digital currency (token) including the AS to the electronic device.

For example, the operating method may include verifying the predetermined OTK pair, checking validity of the token ID, checking a balance of an online digital currency, verifying a signature by the TS, and requesting generation of the AS in consideration of at least one result of the verification of the predetermined OTK pair, the checking of the validity of the token ID, the balance of the online digital currency, or the verification of the signature by the TS.

For example, the operating method may include locking, in a corresponding account, use of an online digital currency corresponding to an offline digital currency issued by offline tokenization, by calling a smart contract corresponding to the token ID in response to the request for generating the AS.

For example, the operating method may include registering the predetermined OTK pair in correspondence with the predetermined BCK pair.

The terms used in the disclosure are used merely to describe a specific embodiment and are not used with the intention to limit the disclosure. For example, a component expressed in the singular should be understood as a concept including a plurality of components unless the context clearly indicates only the singular. Each of the phrases such as 'A or B', 'at least one of A and B', 'at least one of A or B', 'A, B or C', 'at least one of A, B and C', and 'at least one of A, B, or C' used in the disclosure may include any one of the items listed together in the corresponding phrase among the phrases, or all possible combinations thereof. It should be understood that the term 'and/or' used in the disclosure encompasses any and all possible combinations by one or more of the listed items. The terms such as 'include,' 'have,' and 'be composed of' used in the disclosure are only intended to designate the presence of a feature, a component, a part, or a combination thereof described in the disclosure, and are not intended to exclude the presence or possibility of addition of one or more other features, components, parts, or combinations thereof by the use of such terms. The expressions such as 'first,' 'second' used in the disclosure may modify various components regardless of order and/or importance, and are used only to distinguish one component from another component and do not limit the corresponding components.

The expression 'configured to' used in the disclosure may, depending on the situation, be appropriately used interchangeably with, for example, 'suitable for,' 'having the capacity to,' 'designed to,' 'adapted to,' 'made to,' or 'capable of.' The term 'configured to' may not necessarily mean only 'specifically designed to' in terms of hardware. Instead, in some situations, the expression 'a device configured to' may mean that the device 'is capable of' together with other devices or components. For example, the phrase 'a device configured to (or set to) perform A, B, and C' may be a dedicated device for performing the corresponding operations or may mean a general-purpose device capable of performing various operations including the corresponding operations.

Meanwhile, the terms such as 'upper side', 'lower side', and 'front-rear direction' used in the disclosure are defined based on the drawings, and the shape and position of each component are not limited by these terms.

Although the foregoing description in the disclosure has been made focusing on specific embodiments, the disclosure is not limited to such specific embodiments, and it should be understood that the disclosure encompasses all various changes, equivalents, and/or substitutes of various embodiments.

## Claims

1. A method for operating an electronic device, the method comprising:
obtaining a token ID corresponding to an offline tokenization request;
transmitting, to an operating server, a to be signed (TBS) offline token comprising a token signature (TS) in which signing on the token ID, quantitative information of a digital currency to be issued by offline tokenization, and a public key of a predetermined block chain key (BCK) pair or a value derived from the public key is performed by a private key included in a predetermined offline tokenization key (OTK) pair that is an asymmetric key for offline tokenization;
receiving, from the operating server, an offline digital currency (token) comprising an authority signature (AS) in which signing on the TBS offline token is performed by an offline tokenization authority key (OTAK); and
updating offline digital currency information of a corresponding account based on the offline digital currency,
wherein the AS is generated by the operating server based on verification of the predetermined OTK pair, a validity check of the token ID, a balance of an online digital currency, and signature verification by the TS.

2. The method of claim 1,
wherein the obtaining of the token ID comprises:
randomly generating a candidate token ID;
requesting validity verification of the candidate token ID from the operating server; and
determining the candidate token ID as the token ID based on a result of the validity verification of the candidate token ID by the operating server.

3. The method of claim 1,
wherein the obtaining of the token ID comprises:
randomly generating a candidate token ID;
checking validity of the candidate token ID based on details of a distributed ledger; and
determining the candidate token ID as the token ID based on a result of the checking of the validity of the candidate token ID.

4. The method of any one of claims 1 to 3, further comprising:
obtaining the predetermined OTK pair and the predetermined BCK pair in response to a request for generating the corresponding account.

5. The method of any one of claims 1 to 3, further comprising:
obtaining, for the offline tokenization request, the quantitative information capable of predicting an amount of the offline digital currency to be issued by the offline tokenization.

6. The method of any one of claims 1 to 5, further comprising:
establishing a direct communication link with a counterpart electronic device in a situation in which a connection to a block chain network is blocked;
transferring a part or all of the offline digital currency stored in the corresponding account to the counterpart electronic device through the direct communication link in response to an offline transaction request;
updating the offline digital currency information of the corresponding account based on the transferred offline digital currency; and
releasing the direct communication link.

7. The method of any one of claims 1 to 5, further comprising:
establishing a direct communication link with a counterpart electronic device in a situation in which a connection to a block chain network is blocked;
receiving a predetermined offline digital currency from the counterpart electronic device through the direct communication link in response to an offline transaction request;
updating the offline digital currency information of the corresponding account based on the received predetermined offline digital currency; and
releasing the direct communication link.

8. The method of any one of claims 1 to 7, further comprising:
receiving an online tokenization request for a part or all of the offline digital currency stored in the corresponding account;
transmitting a target offline digital currency for online tokenization to the operating server in response to the online tokenization request;
receiving an online tokenization processing result from the operating server; and
outputting online digital currency information in an account updated based on the online tokenization processing result,
wherein the target offline digital currency is generated such that the operating server is able to obtain at least one of the token ID, the predetermined BCK pair, the TS, or the AS.

9. A method for operating an operating server, the method comprising:
receiving, from an electronic device, a to be signed (TBS) offline token comprising a token signature (TS) in which signing on a token ID, quantitative information of a digital currency to be issued by offline tokenization, and a public key of a predetermined block chain key (BCK) pair or a value derived from the public key is performed by a private key included in a predetermined offline tokenization key (OTK) pair that is an asymmetric key for offline tokenization;
generating an authority signature (AS) in which signing on the TBS offline token is performed by an offline tokenization authority key (OTAK); and
transmitting an offline digital currency (token) comprising the AS to the electronic device.

10. The method of claim 9, further comprising:
verifying the predetermined OTK pair;
checking validity of the token ID;
checking a balance of an online digital currency;
verifying a signature by the TS; and
requesting generation of the AS in consideration of at least one result of the verification of the predetermined OTK pair, the checking of the validity of the token ID, the balance of the online digital currency, or the verification of the signature by the TS.

11. The method of claim 10, further comprising:
locking, in a corresponding account, use of an online digital currency corresponding to an offline digital currency issued by the offline tokenization, by calling a smart contract corresponding to the token ID in response to the request for generating the AS.

12. The method of any one of claims 9 to 11, further comprising:
registering the predetermined OTK pair in correspondence with the predetermined BCK pair.

13. The method of any one of claims 9 to 12, further comprising:
sharing the token ID and receiving the TBS offline token per unit amount for the offline tokenization,
wherein the received TBS offline token is signed by the AS.

14. The method of claim 10, further comprising:
in case at least one of the verification of the predetermined OTK pair, the checking of the validity of the token ID, the balance of the online digital currency, or the verification of the signature by the TS fails, rejecting an offline request for the TBS offline token.

15. The method of any one of claims 9 to 14, further comprising:
receiving, from the electronic device, a target offline digital currency for online tokenization by an online tokenization request for a part or all of an offline digital currency stored in a corresponding account; and
transmitting an online processing result to the electronic device,
wherein the target offline digital currency is generated such that the operating server is able to obtain at least one of the token ID, the predetermined BCK pair, the TS, or the AS, and
wherein the offline digital currency (token) is a legal digital currency.
